# EUROPEAN PATENT APPLICATION

(11) **EP 0 937 398 A1**
(43) Date of publication of application: **25.08.1999**
(21) Application number: 99102712.9
(22) Date of filing: 18.02.1999
(51) Int. Cl.: A01N 59/16, A01N 59/20

(54) **Antibacterial and deodorant material and method for producing the same**

(30) Priority: 19.02.1998 JP 3772298; 02.02.1999 JP 2549299
(71) Applicant: DAIDO TOKUSHUKO KABUSHIKI KAISHA, Naka-ku Nagoya-city Aichi-prefecture (JP); KAWASUMI LABORATORIES, INC., Kamakura-shi, Kanagawa (JP)
(72) Inventor: Yanagihara, Kazuo, Okazaki-city, Aichi-prefecture (JP); Shimizu, Takayoshi, Ichinomiya-city, Aichi-prefecture (JP)
(74) Representative: Reinhard - Skuhra - Weise & Partner

(57) **Abstract**

Antibacterial and deodorant material hard to change in quality and excellent in heat resistance in addition to the antibacterial and deodorant ability, which is obtained by dispersively sticking metallic particles consisting of one or both of metallic silver and/or metallic copper in sizes of the order of nano metre, preferably with mean diameter smaller than 4 nm in a range from 0.5 to 5 % by weight, on titanium oxide particle having photocatalysis in sizes of submicron, preferably with mean diameter smaller than 0.04 µm.

## Description

### BACKGROUND OF THE INVENTION

### 1. Field of the Invention

This invention relates to antibacterial and deodorant material excellent in antibacterial action and deodorizing ability and used in various fields such as medical-sanitary wares, air cleaners, building materials, daily necessaries and so on, and relates to antibacterial and deodorant products containing the antibacterial and deodorant material of this kind.

### 2. Description of the Prior Art

Heretofore, the antibacterial and deodorant material is slassified roughly into an organic type and an inorganic type, and there has been used trichlorocarbanido or the like as the organic type. On the other side, the antibacterial and deodorant material of inorganic type is generally excellent in the heat resistance, and characterized by the easiness of the addition into a raw material such as resin and the high safety.

As the antibacterial and deodorant material of inorganic type, material which is composed by applying silver in an ionized state to inorganic compounds such as zeolite, silica, calcium phosphate and the like has been found frequently, as shown in Table 1.

**Table 1**

| Method for applying Silver Ion in Representative Antibacterial Material | |
|---|---|
| carrier | Applying Method |
| Zeolite | Ion exchange |
| Silica | Vitrification |
| Zirconium Phosphate | Ion exchange |
| Silicagel | Complex formation + Coating for preventing Elution |

However, in the presently used antibacterial and deodorant material, the organic type has volatility for the most part and is easy to evaporate in a process of containing the antibacterial and deodorant material into articles, accordingly there is a problem in that it is probable that the antibacterial and deodorant effect becomes unstatable, or change in quality is caused in a case where the products are left at a high temperature.

On the other side, in the antibacterial and deodorant material obtained by applying silver or the inorganic compound such as zeolite or silica in the state of silver ion, there is another problem, for example in a case of mixing the material into synthetic resin, in that it is probable that silver ion is discolored in the result of reaction with ions or so contained in the resin, or the blackening of silver ion is caused by receiving light.

### SUMMARY OF THE INVENTION

This invention is made in the light of the aforementioned problems in the prior art, it is an object to provide antibacterial and deodorant material which is excellent in the heat resistance and easy to be treated at the time of incorporation into the articles as compared with the conventional organic material, and is scarcely in danger of the decoloration and the change in the quality unlike in the case of applying silver on the organic compound in the state of silver ion.

The antibacterial and deodorant material according to this invention is characterized in that one or both of metallic particles selected from metallic silver and metallic copper in sizes of the order of nano metre are dispersively stuck on titanium oxide particles in sizes of submicron which is excellent in the dispersibility.

In the antibacterial and deodorant material according to a preferable embodiment of this invention, the titanium oxide particles of which mean grain daiameter is smaller than 0.04 µm may be selected.

In the antibacterial and deodorant material according to another preferable embodiment of this invention, the titanium oxide particles having photocatalytic ability may be used.

In the antibacterial and deodorant material according to the other embodiment of this invention, the metallic particles of which mean grain diameter is smaller than 4 nm may be preferably used.

In the antibacterial and deodorant material according to the other preferable embodiment of this invention, the metallic particles containing one or both of platinum and palladium, which are effective to improve the photocatalytic ability of the titanium oxide, may be selected.

In the antibacterial and deodorant material according to the other preferable embodiment of this invention, the titanium oxide particles may be dispersively stuck with the metallic particles in weight percentage of 0.5 to 5 %.

The antibacterial and deodorant fiber according to this invention is characterized by containing the antibacterial and deodorant material according to this invention into fiber material.

The antibacterial and deodorant plastics according to this invention are characterized by containing the antibacterial and deodorant material of this invention into resin.

The antibacterial and deodorant ceramics according to this invention are characterized by containing the antibacterial and deodorant material of this invention into glaze of the seramics.

The antibacterial and deodorant spray according to this invention is characterized by containing the antibacterial and deodorant material of this invention into a solvent of the spray.

Furthermore, the antibacterial and deodorant filter according to this invention is characterized by containing the antibacterial and deodorant material of this invention into filter material.

The method for producing the antibacterial and deodorant material according to this invention is characterized by comprising the steps of dispersing titanium oxide particles in sizes of submicron in water to obtain suspension, adding silver and/or copper ammonia complex into the suspension of the titanium oxide, and further adding a reducing agent into the suspension to dispersively stick reduced and precipitated metallic particles consisting of metallic silver and/or metallic copper on surfaces of the titanium oxide particles.

### BRIEF DESCRIPTION OF THE DRAWINGS

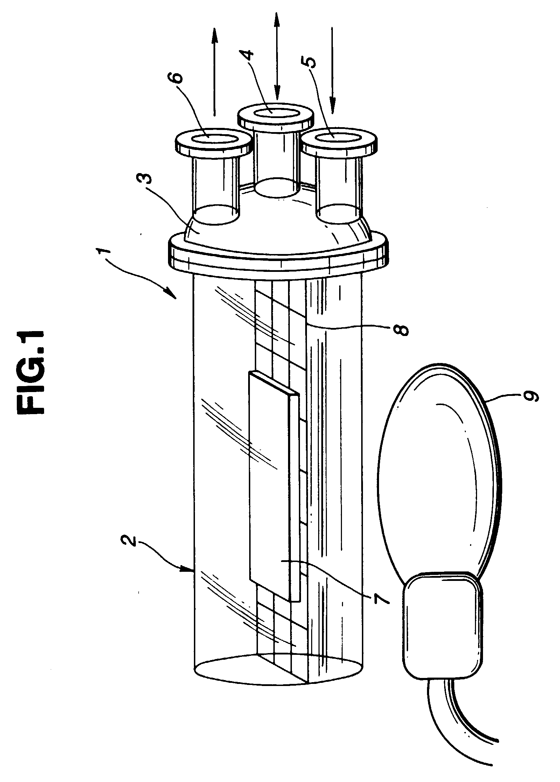

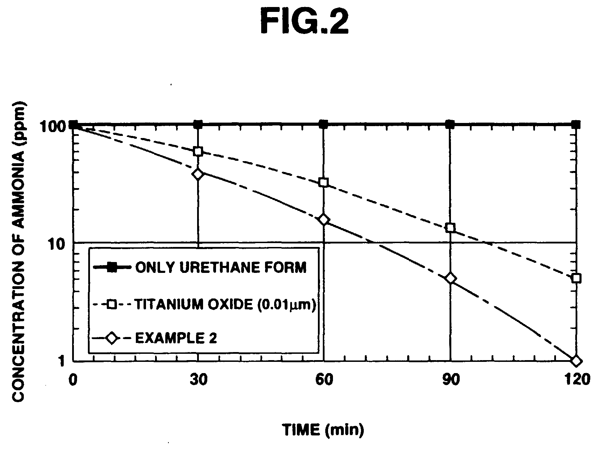

FIG.1 is a perspective view illustrating an outline of the testing apparatus for deodorant ability used in Example 10 of this invention; and FIG.2 is a graph illustrating testing results of the deodorant ability in Example 10 of this invention.

### DETAILED DESCRIPTION OF THE INVENTION

The antibacterial and deodorant material according to this invention is obtained by sticking or making to adhere the metallic particles consisting of one or both of metallic silver and metallic copper in sizes of the order of nm (nano metre) on the titanium oxide particles in sizes of submicron excellent in the dispersibility. As the titanium oxide particles in sizes of submicron to be used in this case, titanium oxide particles with means diameter smaller than 0.04 µm and photocatalytic ability is preferably used. Furthermore, zirconia particles and zirconium phosphate particles can be used in addition to the titanium oxide particles in anatase type or rutile type.

In this time, it takes much time for deodorization and the deodorant ability becomes insufficient when the mean diameter of the titanium oxide particles is too large, therefore it is desirable to use the particles in sizes of submicron with the mean diameter smaller than 0.04 µm, and further preferable to use the particle with the mean diameter not larger-than 0.02 µm.

Although the titanium oxide particles of rutile type or anatase type are used, it is preferable to use the anatase type according to demand, which is provided with photocatalysis (self-cleaning property, that is ability of decomposing substance according to oxidation by receiving light).

As the metallic particles to be stuck dispersively on the surfaces of titanium oxide particles, which is selected from one or both of metallic silver or metallic copper in sizes of the order of nano metre, it is desirable to use the metallic particles with means diameter smaller than 4 nm, and further preferable to use of means diameter not larger than 2 nm.

In this time, if the mean diameter of the metallic particles is too large, the surfaces of the titanium oxide particles are covered by the metallic particles over a wide range and the deodorant ability is apt to be deteriorated, therefore it is desirable to use the metallic particles in sizes of the order of nano metre with the mean diameter smaller than 4 nm.

Furthermore, an amount of the metallic particles stuck on the titanium oxide particles is desirable to be within a range in weight percentage of 0.5 % to 5 % at the time of dispersing the metallic particles on the surfaces of the titanium oxide particles. Namely, if the amount of the stuck metallic particles is less than 0.5 % in weight, the antibacterial ability has a tendency to go insufficient, and when the amount of the stuck metallic particles is more than 5 % in weight, proportion of the surface of the titanium oxide covered with the metallic particles becomes higher and the deodorant ability has a tendency to go insufficient.

The antibacterial and deodorant fiber or the antibacterial and deodorant clothes are obtained in a case of containing the aforementioned antibacterial and deodorant material in fiber material (acrylic fiber, for example) to be used for medical clothes or so. The antibacterial and deodorant plastics are obtained by containing the antibacterial and deodorant material into the synthetic resin such as polyethylene and a refuse bag (polyethylene bag) with the antibacterial and deodorant properties is obtained by forming the plastic sheets of this kind into a backlike shape. Furthermore, the antibacterial and deodorant ceramics are made by baking the ceramic material (biscuit) coated with glaze containing the antibacterial and deodorant material, and the antibaterial and deodorant spray is obtained by dispersing it in the solvent of the spray.

At the time of manufacturing the antibacterial and deodorant material of this kind, the titanium oxide particles in sizes of submicron is dispersed in water to form suspension at first of all, and silver and/or copper ammonia complex is added into the suspension dispersed with the titanium oxide. Next, the reducing agent such as glucose for example in a case of the ammonia complex of silver or hydrazine for example in a case of the ammonia complex of copper is added into the suspension, whereby the metallic particles of metallic silver and/or metallic copper are precipitated and stuck dispersively on the surfaces of the titanium oxide particles dispersed in the suspension because the complex of silver and/or copper is reduced by the reducing agent.

### EXAMPLES

Although examples of the antibacterial and deodorant material according to this invention will be described below together with comparative examples, it need scarcely be said that this invention is not limited only to these examples.

### [Example 1]

First of all, 1.2 g of silver nitrate (containing 0.76 g as Ag) was dissolved in pure water of 10 ml, and then 4 ml of aqueous ammonia was added into the water solution of silver nitrate, whereby ammonia complex of silver nitrate was obtained.

On the other hand, titanium oxide (TiO₂) particles of anatase type with mean diameter of 0.01 µm were prepared, and the titanium oxide particles of 75 g were added into pure water of 260 ml and dispersed in the water to form suspension by stirring. The solution of the ammonia complex of silver nitrate obtained by the aforementioned operation was added into the suspension of the titanium oxide, and the suspension was further stirred together with the solution of the ammonia complex.

Next, 100 ml of glucose solution containing glucose of 8 g was added as a reducing agent into the suspension, and metallic silver was precipitated on the surfaces of the titanium oxide particles by heating the suspension at a temperature of 30 to 50 °C for an hour at the same time of stirring.

Subsequently, the titanium oxide particles with the metallic silver were separated from the suspension by decantation, rinsed with water and dried, whereby about 76 g of antibacterial and deodorant material was obtained as shown in a column of Example 1 of Table 2, which is composed of the titanium oxide particles with mean diameter of 0.01 µm and the metallic particles consisting of metallic silver of 0.76 g (1 wt %) stuck dispersively on the surfaces of the titanium oxide particles.

### [Example 2]

Silver nitrate of 3.8 g (containing 2.37 g of Ag) was dissolved in pure water of 40 ml, and 4 ml of aqueous ammonia was added into the water solution of silver nitrate, thereby obtaining ammonia complex of silver nitrate. Subsequently, antibacterial and deodorant material composed of the titanium oxide particles with mean diameter of 0.01 µm and the metallic particles consisting of metallic silver of 2.37 g (5 wt %) stuck dispersively on the surfaces of the titanium oxide particles was obtained as shown in a column of Example 2 of Table 2, in the same manner as Example 1.

### [Example 3]

Antibacterial and deodorant material was obtained as shown in a column of Example 3 of Table 2, in the same manner as Example 1 excepting that titanium oxide particles with mean diameter of 0.02 µm were used and silver nitrate was added in water so that the metallic particles of silver may be stuck on the titanium oxide particles in an amount of 0.5 % by weight.

### [Example 4]

Antibacterial and deodorant material shown in a column of Example 4 of Table 2 was obtained in the same manner as Example 1 excepting that titanium oxide particles with mean diameter of 0.02 µm were used.

### [Example 5]

Antibacterial and deodorant material shown in a column of Example 5 of Table 2 was obtained in the same manner as Example 1 excepting that titanium oxide particles with mean diameter of 0.02 µm were used, and silver nitrate was added in water so that the metallic particles of silver may be stuck on the titanium oxide particles in an amount of 5 % by weight.

### [Example 6]

First of all, 11.4 g of copper nitrate tri-hydrate (containing 3.0 g as Cu) was dissolved in pure water of 20 ml, and ammonia complex of copper nitrate was obtained by adding aqueous ammonia of 1 ml into the water solution of copper nitrate.

Besides, titanium oxide (TiO₂) particles of anatase type with mean diameter of 0.01 µm were prepared, and 97 g of the titanium oxide particles were added into pure water of 300 ml and dispersed in the water to form suspension by stirring. Then the solution of the ammonia complex of copper nitrate obtained by the aforementioned operation was added into the suspension of the titanium oxide, and the suspension was further stirred together with the solution of the complex.

Subsequently, 20 ml of hydrazine solution was added into the suspension as a reducing agent, and metallic copper was precipitated on the surfaces of the titanium oxide particles by heating the suspension at a temperature of 30 to 50 °C for an hour at the same time of stirring.

Furthermore, the titanium oxide particles with the metallic copper were separated from the suspension through decantation, rinsed with water and dried, whereby antibacterial and deodorant material shown in a column of Example 6 of Table 2 was obtained, which is composed of the titanium oxide particles with mean diameter of 0.01 µm and the metallic particles consisting of metallic copper of 3 g (3 wt %) stuck dispersively on the surface of the titanium oxide particles.

### [Example 7]

Antibacterial and deodorant material shown in a column of Example 7 of Table 2 was obtained in the same manner as Example 6 excepting that the amount of copper nitrate was so moderated that the metallic particles of copper may be stuck on the titanium oxide particles in an amount of 1 % by weight.

### [Example 8]

In the first place, silver nitrate of 1.7 g (containing 1.1g as Ag) and copper nitrate tri-hydrate of 3.8 g (containing 1.0 g as Cu) were dissolved in pure water of 20 ml, and ammonia complex of silver nitrate and copper nitrate was obtained by adding aqueous ammonia of 25 ml into the water solution of silver nitrate and copper nitrate.

In addition to this, titanium oxide particles of anatase type with mean diameter of 0.01 µm were prepared, and the titanium oxide particle of 98 g were added into pure water of 300 ml and dispersed in the water to form suspension by stirring. Further the solution of the ammonia complex of silver nitrate and copper nitrate obtained through the above-mentioned procedure was added into the suspension of the titanium oxide, and the suspension was further stirred together with the complex solution.

Next, hydrazine solution of 20 ml was added as a reducing agent into the suspension, and metallic silver and metallic copper were precipitated on the surfaces of the titanium oxide particles by heating the suspension at a temperature 30 to 50 °C for an hour at the same time of stirring.

Subsequently, the titanium oxide particles with the metallic particles were separated from the suspension through decantation, washed with water and dried, whereby antibacterial and deodorant material shown in a column of Example 8 of Table 2 was obtained, which is composed of the titanium oxide particles and the metallic particles consisting of metallic silver of 1.1 g (1 wt %) and metallic copper of 1.0 g (1 wt %) stuck dispersively on the surfaces of the titanium oxide particles.

### [Comparative Example 1]

Antibacterial and deodorant material shown in a column of Comparative Example 1 of Table 2 was obtained in the same manner as Example 1 with the exception that titanium oxide particles with mean diameter of 0.2 µm were used and the amount of silver nitrate was added in water so that the metallic particles of silver may be stuck on the titanium oxide particles in an amount of 2 % by weight.

### [Comparative Example 2]

Antibacterial and deodorant material shown in a column of Comparative Example 2 of Table 2 was obtained in the same manner as Example 1 with the exception that titanium oxide particles with mean diameter of 0.02 µm were used and the metallic silver is regulated so as to be stuck on the titanium oxide particles in an amount of 0.1 % by weight.

### [Comparative Example 3]

Antibacterial and deodorant material shown in a column of Comparative Example 3 of Table 2 was obtained in the same manner as Example 1 excepting that the metallic silver is regulated so as to be stuck on the titanium oxide particles in an amount of 7 % by weight.

### [Comparative Example 4]

Antibacterial and deodorant material with no metallic particle shown in a column of Comparative Example 4 of Table 2 was obtained by using the titanium oxide particles with mean diameter of 0.02 µm.

### (Measurement of Minimal Inhibitory Concentration (MIC))

### 1. Preparation of inoculative bacterium solution

After sterilization of needful specimens, tools and apparatus, a bacterial strain disk was put into MHB medium and proliferation was carried out at a temperature of 37 °C for 16 to 20 hours. After centrifuging the proliferated medium for 10 minutes at 3000 rpm, a stock solution was obtained by adding the MHB medium into the deposit. Subsequently, an inoculative bacterium solution of 1.0∼ 5.0×10⁴/ml was prepared by diluting the stock solution with the MHB medium, and the inoculative bacterium solution was further diluted into 30∼300/ml in order to count initial cell number of bacteria. Then sake cultivation in the standard agar medium was carried out, and the number of colonies was counted after the cultivation for 24 hours at 37 °C.

### 2.Preparation of testing medium

The MHB medium of 10 ml was separately poured into an L-shaped test tube and heated at 121 °C for 15 minutes in an autoclave, a system was prepared by adding a sample in double-amount respectively into the medium as a standard amount of 100 µg/ml, and then the inoculative bacterium solution of 0.1 ml was added into this double system medium.

### 3. Cultivation of testing medium

The testing medium obtained through the above-mentioned procedure was cultivated for 24 hours at a temperature of 35 to 37 °C at the same time of shaking it in a condition capable of uniformly mixing the sample.

### 4. Judgement

The minimal inhibitory concentration (MIC) of the sample against testing bacteria was defined as the minimum concentration of the sample possible to hinder the growth of the bacteria through the macroscopic observation after the cultivation for the predetermined time. In general, the antibacterial ability of the sample is recognized when the MIC-value of the sample is lower than 600 µg/l. The results of measurement of the MIC-value are also shown in Table 2.

### (Evaluation of Deodorant action)

A sample of 1 g was put into a laboratory dish placed in a vessel with cap made of glass and illuminated by a fluorescent light of 10 W from a position with at a distance of 20 cm. In this time, acetaldehyde was introduced in the vessel of glass in the concentration of 100 ppm, and the deodrant ability of the sample was evaluated with time required for the acetaldehyde concentration to be reduced by one half by measuring the change of the concentration together with time. The obtained results are shown similarly in Table 2.

**Table 2**

| Results of Evaluation for Antibacterial Ability through MIC Method and Deodorant Ability | | | | | | |
|---|---|---|---|---|---|---|
| No. | | Mean Diameter of Titanium Oxide (µm) | Kind of Metallic Particles | Amount of Metallic Particles (wt %) | MIC-Value (µg/l) | Time required for Deodorization (hour) |
| Example | 1 | 0.01 | Ag | 1 | 200 | 2.6 |
| | 2 | 0.01 | Ag | 5 | 200 | 3.0 |
| | 3 | 0.02 | Ag | 0.5 | 600 | 2.5 |
| | 4 | 0.02 | Ag | 1 | 400 | 2.7 |
| | 5 | 0.02 | Ag | 5 | 200 | 3.0 |
| | 6 | 0.01 | Cu | 3 | 400 | 3.0 |
| | 7 | 0.01 | Cu | 1 | 600 | 2.5 |
| | 8 | 0.01 | Ag , Cu | 1.1 , 1.0 | 200 | 2.5 |
| Comparative Example | 1 | 0.02 | Ag | 2 | 200 | >5.0 |
| | 2 | 0.02 | Ag | 0.1 | 1000 | 2.0 |
| | 3 | 0.01 | Ag | 7 | 200 | >5.0 |
| | 4 | 0.02 | - | - | >1000 | 2.0 |

As is apparent from Table 2, in the antibacterial and deodorant material of Example 1 to Example 8, the MIC-value was not higher than 600 µg/l in every case and it was confirmed to possess effective antibacterial ability. Furthermore, the time required for deodorization was within 3 hours in all cases, and effective deodorant ability of these material was recognized.

As compared with above, in the material of Comparative Example 1 of which mean diameter of the titanium oxide was 0.2 µm, it took a lot of time to deodorize and the deodorant ability was not so excellent.

In the material of Comparative Example 2 of which amount of the metallic particles was 0.1 % by weight, the MIC-value was high and the antibacterial ability is not so excellent.

Conversely, in the material of Comparative Example 3 of which amount of the metallic particles was excessive as much as 7 % by weight, the deodorant ability was not so excellent because the proportion of the surface of titanium oxide covered with the metallic particles was increased.

Furthermore, in the material of Comparative Example 4 of which titanium oxide particles were not stuck with the metallic particles on surfaces thereof, the MIC-value was so high and this material was inferior to the antibacterial and deodorant material according to Example 1 to 8 of this invention in the antibacterial ability.

### [Example 9]

The antibacterial and deodorant material of Example 2 shown in Table 2, alkoxide of silan series and ethyl alcohol were blended in a rate shown in Table 3, and spray liquid was obtained by mixing and dispersing them at the high speed using homogenizer.

| Table 3 | |
|---|---|
| Antibacterial and deodorant material of Example 2 | 0.3 wt % |
| Alkoxide of silan series [Si(O―C₂H₅)₄] | 3.0 wt % |
| Ethyl Alcohol | remainder |

Next, the aforementioned spray liquid and liquefied petroleum gas (LPG) as pressurizer gas were charged in a spray can in the ratio 50:50 to obtain the antibacterial and deodorant spray according to this invention. Successively, the following test was carried out in order to examine the antibacterial ability of this antibacterial and deodorant spray.

### (Test for antibacterial ability)

① Two sterilized laboratory dishes of 90 mm in diameter with caps were prepared a specimens. One of the dishes was sprayed uniformly for 1 second with the antibacterial and deodorant material spray obtained through the above-mentioned process on the inner surface from the upper position at a distance of 20 cm, and then dried for 24 hours at room temperature. Another dish was used as a blank specimen without applying the spray.
② Coli bacteria (ATCC 25922) and staphylococcus aureus (ATCC 2592) are cultivated, and dispersed uniformly into NB medium (ordinary bouillon medium) diluted into 1/500, whereby obtaining testing bacterium solution.
③ The aforementioned testing bacterium solution of 0.5 ml was dropped on the respective specimens (laboratory dishes) and covered softly with sterilized polyethylene films in sizes of 5×5 cm. The laboratory dishes were maintained at a temperature of 30 °C and humidity not lower than 90 % after covering the dishes with the caps.
④ After the lapse of 24 hours, viable cell number of bacteria was measured by washing the dishes and the polyethylene films attached with the bacterium solution using SCDLP medium of 10 ml.

The results are shown in Table 4.

**Table 4**

| Specimen | Viable Cell Number | | | |
|---|---|---|---|---|
| | Coli Bacteria | | Staphylococcus Aureus | |
| | Initial Number | After 24 hours | Initial Number | After 24 hours |
| Blank | 5.2 × 10⁵ | 5.2×10⁷ | 1.3×10⁵ | 1.0×10⁵ |
| Application of Spray | | <10 | | <10 |

As is apparent from the results shown in Table4, it was confirmed that the antibacterial and deodorant spray according to this invention was remarkably excellent in the antibacterial ability.

### (Deodorization test)

As a result of applying spray on a toilet stool of the domestic lavatory using the aforementioned antibacterial and deodorant spray, an unpleasant smell was decreased for a few days and it is confirmed that the antibacterial and deodorant spray according to this invention was remarkably excellent also in the deodorant ability.

### [Example 10]

A filter according to an example of this invention and a filter according to a comparative example were manufactured by using the antibacterial and deodorant material of Example 2 and the titanium oxide particles with mean diameter of 0.01 µm which were used in Example 2 and not yet stuck with the metallic silver particles thereon, individually.

In the first place, the antibacterial and deodorant material of Example 2 shown in Table 2 or the titanium oxide particles stuck with no metallic particles, alkoxide of silan series and ethyl alcohol were blended in a rate shown in Table 5, and two kinds of spray liquids were obtained by mixing and dispersing them at the high speed using the homogenizer, respectively.

**Table 5**

| Ingredients | Inventive Example | Comparative Example |
|---|---|---|
| Antibacterial and deodorant material of Example 2 | 5.0 wt % | - |
| Titanium oxide particles with no silver particles | - | 5.0 wt % |
| Alkoxide of silan series [Si(O―C₂H₅)₄] | 10.0 wt % | 10.0 wt % |
| Ethyl alcohol | remainder | remainder |

Subsequently, the spray liquids were applied on urethane foams of polyether series (cell size:30 inch², thickness:10 mm), respectively using an air spray gun so that application density of the antibacterial and deodorant material or the titanium oxide particles may be 5 g/m², and the urethane foams were activated by irradiating ultraviolet rays of 1.0 mW through the ultraviolet lamp after air drying.

### (Test for deodorant ability)

In this test, a test equipment shown in FIG.1 was used. The test equipment 1 for deodorant ability is composed of a separable flask (vessel) 2 made of pirex glass, which is provide with an aperture to be closed with a lid 3 at an end thereof and so designed as to hermetically seal the inner part by closing the aperture with the lid 3.

The lid 3 is provided with a gas introducing and sampling hole 4 so as to introduce malodorous gas such as acetaldehyde, ammonia or the like into the inner part of the vessel, and further provided with an air intake 5 to introduce air into the inner part of the vessel and an exhaust hole 6 to discharge gas in the vessel through a vacuum pump.

Furthermore, the test equipment is provided with a wire mesh 8 to be placed with a filter sample 7 in the vessel, and disposed with a black light 9 of 100 W in the lower side of the separable flask 2 for applying ultraviolet rays to the filter sample 7. The black light 9 is disposed so that the intensity of the ultraviolet rays may be 2.0 mW/cm² at the surface of the filter sample 7 at the time of setting the filter sample 7 on the wire mesh 8 in the vessel.

At the starting of the test for the deodorant ability, the filter sample 7 (5 cm× 10 cm) was set on the wire mesh 8 in the separable flask 2 of the test equipment 1 in a state where the flask 2 was covered with a hollow cylinder made of stainless steel so as not to apply the ultraviolet rays to the filter sample 7 after stabilizing the black light 9 by lighting for 10 minutes at least. Subsequently, an atmosphere in the vessel was replaced with air by introducing air through the air intake 5 after reducing the pressure in the vessel by the vacuum pump, and ammonia was introduced into the vessel as malodorous gas after repeating the replacement operation three times. The malodorous gas was regulated in 100 ppm as the initial concentration.

After finishing a series of these operations, the test for the deodorant ability was started by performing irradiation of the ultraviolet rays.

FIG.2 is a graph illustrating the relationship between the time elapsed after starting the irradiation of ultraviolet rays and the ammonia concentration. As is apparent from FIG.2, the removal action of ammonia was not recognized at all in a case of only the urethane foam, and the deodorant ability in some degree was recognized in a case of the filter with the titanium oxide particles stuck with no metallic particle as the comparative example. As compared with above, in the case of the antibacterial and deodorant filter according to this invention, it was confirmed that the concentration of ammonia was further reduced and substantially disappeared after the time passage of 120 minutes because of the removal action against ammonia more excellent as compared with the filter with the titanium oxide without metallic particles.

In the antibacterial and deodorant filter of this kind according to this invention, it seems that polarization is easy to be caused since the metallic particles is stuck dispersively at the active point of the photocatalyzer consisting the titanium oxide particles.

As mentioned above, the antibacterial and deodorant material according to this invention is composed of the titanium oxide particles in sizes of submicron dispersively stuck with metallic particles consisting of one or both of metallic silver and metallic copper in sizes of the order of nano metre, accordingly a remarkable effect can be obtained in that it is possible to provide the antibacterial and deodorant material excellent in the antibacterial ability and the deodorant ability by dispersively sticking the metallic silver and/or copper having antibacterial action and deodorizing action on the titanium oxide particles in submicron sizes having good dispersibility.

By using the titanium oxide particles with mean diameter smaller than 0.04 µm in the first embodiment of this invention, another effect can be obtained in that it is possible to provide the antibacterial and deodorant material able to shorten the time required for deodorization and excellent in the deodorant ability in addition to the antibacterial ability.

In the second embodiment of this invention, a remarkable effect can be further obtained in that it is possible to provide the antibacterial and deodorant material able to oxidize and decompose the substance in contact with the titanium oxide according to the photocatalysis and excellent also in the self-cleaning property by using the titanium oxide particles having the photocatalysis.

Further, by using the metallic particles with means diameter smaller than 4 nm in the third embodiment of this invention, the other effect can be obtained in that it is possible to provide the antibacterial and deodorant material able to utilize sufficiently the antibacterial and photocatalyzer properties of the titanium oxide.

By using the metallic particles containing one or both of platinum and palladium to improve the photocatalytic ability of the titanium oxide in the fourth preferred embodiment of this invention, the other remarkable effect can be obtained in that it is possible to provide the antibacterial and deodorant material having the further improved self-cleaning property of the titanium oxide.

In the fifth embodiment of this invention, the other effect can be remarkably obtained in that it is possible to provide thee antibacterial and deodorant material able to further utilize the antibacterial action of the metallic particles in addition to the sufficient utilization of the antibacterial ability and the deodorant ability of the titanium oxide by sticking dispersively the metallic particles by weight percentage of 0.5 to 5 %.

In the antibacterial and deodorant fiber according to another aspect of this invention, an excellent effect can be obtained in that it is possible to provide the fiber suitable for medical and sanitary working wear, working wear for manufacturing precision electronic equipment and the like by containing the antibacterial and deodorant material according to this invention into fiber material.

Further, in the antibacterial and deodorant plastics according to the other aspect of this invention, a remarkable effect can be further obtained in that it is possible to provide the plastics material excellent in the antibacterial and deodorant ability by containing the antibacterial and deodorant material according to this invention into resin.

Furthermore, in the antibacterial and deodorant ceramics according to the other aspect of this invention, a further remarkable effect can be obtained in that it is possible to provide the ceramics excellent in the antibacterial and deodorant ability by containing the antibacterial and deodorant material according to this invention into glaze.

In the antibacterial and deodorant spray according to the other aspect of this invention, a remarkable effect can be further obtained in that it is possible to provide the spray excellent in the antibacterial and deodorant ability by containing the antibacterial and deodorant material according to this invention into the solvent.

In the antibacterial and deodorant filter according to the other aspect of this invention, an excellent effect can be further obtained in that it is possible to provide the antibacterial and deodrant filter suitable for an air cleaner or so by containing the antibacterial and deodorant material according to this invention into filter material.

In the method for producing antibacterial and deodorant material according to this invention, a remarkable effect can be obtained in that it is possible to manufacture the antibacterial and deodorant material excellent in the antibacterial and deodorant ability easily in low cast through the steps of dispersing titanium oxide particles in sizes of submicron in water, adding silver and/or copper ammonia complex into the obtained suspension, and adding a reducing agent into the suspension to dispersively stick reduced and precipitated metallic particles consisting of metallic silver and/or metallic copper on surfaces of the titanium oxide particles.

## Claims

1. Antibacterial and deodorant material composed of titanium oxide particles in sizes of submicron dispersively stuck with metallic particles consisting of one or both of metallic silver and metallic copper in sizes of the order of nano metre.

2. Antibacterial and deodorant material as set forth in claim 1, wherein mean diameter of said titanium oxide particles is smaller than 0.04 µm.

3. Antibacterial and deodorant material as set forth in claim 1 or 2, wherein said titanium oxide particles have photocatalysis.

4. Antibacterial and deodorant material as set forth in any one of claims 1 to 3, wherein mean diameter of said metallic particles is smaller than 4 nm.

5. Antibacterial and deodorant material as set forth in any one of claims 1 to 4, wherein said metallic particles contain one or both of platinum and palladium to improve the photocatalytic ability of said titanium oxide.

6. Antibacterial and deodorant material as set forth in any one of claims 1 to 5, wherein said titanium oxide particles are dispersively stuck with the metallic particles of 0.5 to 5 % in weight.

7. An antibacterial and deodorant fiber containing antibacterial and deodorant material according to any one of claims 1 to 6 in fiber material.

8. Antibacterial and deodorant plastics containing antibacterial and deodorant material according to any one of claims 1 to 6 in resin.

9. Antibacterial and deodorant ceramics containing antibacterial and deodorant material according to any one of claims 1 to 6 in glaze.

10. Antibacterial and deodorant spray containing antibacterial and deodorant material according to any one of claims 1 to 6 in a solvent.

11. An antibacterial and deodorant filter containing antibacterial and deodorant material according to any one of claims 1 to 6 in filter material.

12. A method for producing antibacterial and deodorant material according to any one of claims 1 to 6 comprising the steps of:
dispersing titanium oxide particles in sizes of submicron in water to obtain suspension;
adding silver and/or copper ammonia complex into the suspension of the titanium oxide; and
adding a reducing agent into the suspension to dispersively stick reduced and precipitated metallic particles consisting of metallic silver and/or metallic copper on surfaces of the titanium oxide particles.
